(19) Europäisches Patentamt
European Patent Office
Office européen des brevets

(11) **EP 1 927 014 B1**

(12) **EUROPÄISCHE PATENTSCHRIFT**

(45) Veröffentlichungstag und Bekanntmachung des Hinweises auf die Patenterteilung:
**27.02.2013 Patentblatt 2013/09**

(21) Anmeldenummer: **06792561.0**

(22) Anmeldetag: **25.07.2006**

(51) Int Cl.:
*G01S 7/497* (2006.01)      *G01S 7/481* (2006.01)
*G01S 17/08* (2006.01)      *G01S 17/36* (2006.01)

(86) Internationale Anmeldenummer:
**PCT/EP2006/064620**

(87) Internationale Veröffentlichungsnummer:
**WO 2007/031359 (22.03.2007 Gazette 2007/12)**

(54) **ELEKTRO-OPTISCHES MESSGERÄT**

ELECTRO-OPTICAL MEASURING DEVICE

APPAREIL DE MESURE ELECTROOPTIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.09.2005 DE 102005043418**

(43) Veröffentlichungstag der Anmeldung:
**04.06.2008 Patentblatt 2008/23**

(73) Patentinhaber: **ROBERT BOSCH GMBH**
**70442 Stuttgart (DE)**

(72) Erfinder:
• **SKULTETY-BETZ, Uwe**
  **70771 Leinfelden-Echterdingen (DE)**
• **HAASE, Bjoern**
  **70182 Stuttgart (DE)**
• **STIERLE, Joerg**
  **71111 Waldenbuch (DE)**
• **WOLF, Peter**
  **70771 Leinfelden-Echterdingen (DE)**
• **FLINSPACH, Gunter**
  **71229 Leonberg (DE)**
• **PAHUD, Cédric**
  **CH-1110 Morges (CH)**
• **RENZ, Kai**
  **70771 Leinfelden-Echterdingen (DE)**
• **SCHULTE, Clemens**
  **70197 Stuttgart (DE)**

(56) Entgegenhaltungen:
EP-A2- 0 384 353      EP-A2- 1 054 267
WO-A-00/33104        WO-A-92/05455
DE-A1- 4 316 348      DE-A1- 10 130 763
DE-A1- 10 254 888     DE-A1- 19 804 059
DE-A1- 19 860 464     JP-A- 9 021 874
US-A- 5 589 930

**Beschreibung**

Die Erfindung geht aus von einem elektro-optischen Messgerät nach dem Oberbegriff des unabhängigen Anspruchs.

Stand der Technik

Elektro-optische Messgeräte mit einem bi-axialen System von Sende- bzw. Empfangspfad werden beispielsweise als berührungslose Entfernungsmessgeräte verwendet und sind als solche seit geraumer Zeit kommerziell erhältlich. Diese Geräte senden über einen Sendepfad ein moduliertes Messsignal aus, welches an der Oberfläche eines Zielobjektes, dessen Abstand zum Gerät zu ermitteln ist, reflektiert bzw. gestreut wird. Ein Anteil der reflektierten bzw. gestreuten Messstrahlung gelangt wieder zum Messgerät und wird dort von einer Empfangseinheit detektiert.

Aus der Laufzeit des Messsignals bzw. aus der mit der Laufzeit korrelierten Phasenverschiebung zwischen dem ausgesendeten Messsignal und dem detektierten rücklaufenden Messsignal kann auf den Abstand des Zielobjektes zum Messgerät geschlossen werden.

Bi-axiale Messsysteme, bei denen der Sendepfad vom Empfangspfad beabstandet angeordnet ist, haben den Vorteil, dass es eines aufwendigen Strahlungsteilungssystems zur Selektion des rücklaufenden Messsignals nicht bedarf, sodass beispielsweise ein optisches Übersprechen aus dem Sendepfad direkt in den Empfangspfad zu einem größeren Anteil unterdrückt werden kann.

Andererseits erfordern bi-axiale Messgeräte Maßnahmen zur Kompensation der Parallaxe zwischen dem Sende- und Empfangspfad.

Während für große Zielentfernungen die Abbildung des Zielobjektes auf die Detektoroberfläche des Empfängers noch eindeutig auf dem Empfänger liegt, wandert mit kürzer werdender Messentfernung zunehmend von der optischen Achse des Empfangspfades weg und erfährt zudem eine Variation des Strahlquerschnittes in der Empfängerebene.

Die bedingt, dass ohne zusätzliche Maßnahmen am Gerät, im Nahbereich der Detektion, das heißt für einen kleinen Abstand zwischen einem gewünschten Zielobjekt und dem Messgerät, das Messsignal gegen null gehen kann.

Aus dem Stand der Technik sind verschiedene Maßnahmen zur Parallaxen-Kompensation bi-axialer Messsysteme bekannt, die sich zum einen auf die Ausgestaltung des Empfängers bzw. zum anderen auf die Ausgestaltung der Empfangsoptik beziehen.

Aus der DE 43 16 348 A1 ist eine Vorrichtung zur Distanzmessung mit einem von einem Halbleiterlaser erzeugten sichtbaren Messstrahlenbündel bekannt, deren Empfangseinrichtung einen Lichtleiter mit nachgeschaltetem opto-elektronischen Wandler umfasst. Die Lichteintrittsfläche in die Faser des Lichtleiters ist in der Abbildungsebene des Empfangsobjektives dieses Gerätes für große Objektentfernungen angeordnet und aus dieser Position heraus, quer zur optischen Achse verschiebbar. Auf diese Weise ermöglicht es, die Vorrichtung der DE 43 16 348 A1, die bei kurzen Objektdistanzen zunehmend schräger in das Empfangsobjektiv einfallenden Messstrahlen über die Nachführung der optischen Faser, bei räumlich nicht veränderbaren Detektor, auf die lichtempfindliche Oberfläche des Detektors zu leiten.

Alternativer Weise schlägt die DE 43 16 348 A1 zur Lösung des Parallaxenproblems bi-axialer Messgeräte vor, die Lichtleitereintrittsfläche feststehend anzuordnen und durch optische Umlenkmittel bei kürzeren Objektdistanzen, die Abbildungsposition des Messstrahlenbündels zur optischen Achse des Empfangsobjektives umzulenken.

Dazu schlägt die DE 43 16 348 A1 die Verwendung von Prismen oder diffraktiven optischen Elementen vor, die in der Nähe des Empfangsobjektives angeordnet werden.

Aus der DE 198 60 464 A1 ist ein Laserentfernungsmessgerät für große Messbereiche mit zueinander parallel angeordneten Sende- und Empfangskanal bekannt, wobei das Empfangsobjektiv eine modifizierte Einzellinse ist, bestehend aus einem primären Linsenbereich mit einer primären optischen Empfangsachse, die parallel zur optischen Sendeachse ausgerichtet ist, sowie mit einem sekundären Linsenbereich mit einer sekundären optischen Empfangsachse, die zur primären optischen Empfangsachse um einen Winkel $\alpha$ geneigt ist, sodass ein primärer Brennpunkt und ein sekundärer Brennpunkt entstehen.

Aus der WO 92/05455 ist eine koaxiale, optische Distanzmessvorrichtung bekannt, deren Empfangsoptik zonenartige Elemente unterschiedlicher Brennweite aufweist. Mit Hilfe dieser speziellen Empfangsoptik wird Licht aus unterschiedlichen Objektdistanzen durch das jeweils zugeordnete zonale Element der Abbildungsoptik optimal auf den Empfänger fokussiert.

Aus der WO 2000/033104 A1 ist eine Vorrichtung zur Entfernungsmessung mittels eines Halbleiterlasers im sichtbaren Wellenlängenbereich bekannt. welche nach dem Laufzeitverfahren arbeitet. Es ist ein Kollimationsobjektiv zur Bündelung des ausgesandten Messstrahlenbündels, eine Schaltungsanordnung zur Modulation der Messstrahlung, ein Empfangsobjektiv zur Aufnahme und Abbildung des am entfernten Objekt reflektierten Messstrahlenbündels auf eine Empfangseinrichtung und eine Auswerteeinrichtung zur Ermittlung und Anzeige der zum Objekt gemessenen Entfernung vorgesehen. Die Vorrichtung der WO 2000/033104 A1 nutzt die bei diesem Aufbau entstehende Parallaxe im Nahbereich dazu, ein zu starkes Ansteigen des Empfangssignals zu verhindern.

Aus der DE 198 04 059 A1 ist eine Vorrichtung zur optischen Distanzmessung mittels Laufzeitmessung bekannt, welche eine Sendeoptik zur Aussendung eines gebündelten Messsignals und eine Empfangsoptik zum Einfangen eines an einem entfernten Objekt reflektierten Messsignal-Anteils hat Der Empfangsoptik ist ein optoelektrischer Wandler nachgeordnet der mit einer Auswerteeinrichtung verbunden ist. Die Empfangsoptik umfasst eine FresnelLinse, die aufgrund ihrer segmentartigen Zusammensetzung sowohl als Sammellinse für weite Objektentfernungen dient, als auch durch diffuse Streuung dafür sorgt, dass auch bei kurzen Objektdistanzen Messsignal-Anteile in ausreichender Intensität zum Wandler gelangen.

Die JP 09 021 874 A1 offenbart eine optische Entfernungsmessvorrichtung auf Infrarotbasis für den Automobilbereich, bei dem IR-Licht (860nm), welches über die Vorrichtung ausgesendet wird und an einem beabstandeten Messobjekt, wie beispielsweise einem vorausfahrenden Fahrzeug, reflektiert wird, zum Teil wieder in die Vorrichtung zurückgelangt und über eine Empfangslinse mit großen Öffnungswinkel, die als Fresnellinse ausgestaltet ist, auf den Detektor der Vorrichtung gelenkt wird. Als Detektor verwendet die Vorrichtung der JP 09 021 874 A1 eine PIN-Diode.

Die US 5,589,930 beschreibt ein optisches Abstandsradar, insbesondere für ein Abstandsregelsystem zwischen Automobilen, bei dem ein optisches Messsignal über die Vorrichtung ausgesendet wird und an einem beabstandeten Messobjekt, wie beispielsweise einem vorausfahrenden Fahrzeug, reflektiert wird, zum Teil wieder in die Vorrichtung zurückgelangt und über eine Detektionseinheit und nachgeschalteter Signalverarbeitung hinsichtlich des Abstandes zwischen den Objekten ausgewertet wird. Bei der Abstandsmessvorrichtung der US 5,589,930 befindet sich im Sendeast der Entfernungsmesseinheit eine Doppelfokuslinse. Aufgrund dieser speziellen Linse weist das Sendesignal zwei Lichtkeulen mit unterschiedlichem Öffnungswinkel auf. Licht aus einem ersten fokussierenden Bereich der Linse besitzt eine geringe Divergenz und erreicht damit Objekte, wie beispielsweise vorausfahrende Fahrzeuge, auch in einem großen Abstand. Licht aus dem zweiten fokussierenden Bereich der Linse besitzt eine große Divergenz, wird diffuser verteilt und deckt somit den fahrzeugnahen Bereich der Abstandsüberwachung ab.

Vorteile der Erfindung

Das erfindungsgemäße elektro-optische Messgerät weist einen Sendepfand mit zumindest einem optischen Sender zur Aussendung eines Messsignals auf, sowie einen Empfangspfad mit zumindest einer Empfangsoptik zur Bündelung eines Messsignals in Richtung auf einen Empfänger. Die optischen Achsen von Sendepfad und Empfangspfad sind zueinander beabstandet angeordnet, so dass das erfindungsgemäße elektro-optische Messgerät ein bi-axiales System bildet. Zur Parallaxen-Kompensation dieses bi-axialen optischen Systems weist das erfindungsgemäße elektro-optische Messgerät zudem ein optisches Nahbereichselement auf.

In vorteilhafter Weise ist das Nahbereichselement zur Parallaxen-Kompensation rotationssymmetrisch zur optischen Achse des Empfangspfades ausgebildet

Ein elektro-optisches Messgerät, wie beispielsweise ein berührungsloses Entfernungsmessgerät, welches als bi-axiales System ausgebildet ist, ist typischerweise auf einen bestimmten Messbereich, das heißt Entfernungsbereich hin optimiert. Aus diesem optimalen Entfernungsbereich wird das Messsignal, welches beispielsweise an einem Zielobjekt reflektiert oder gestreut wird, durch die Abbildungsoptik des Messgerätes optimal gebündelt und auf den Empfänger des Messgerätes fokussiert. Typischerweise befindet sich der Empfänger des Messgerätes im Abstand der Brennweite der Empfangsoptik von dieser entfernt, so dass ein Messsignal, welches scheinbar aus dem Unendlichen kommt, effektiv auf den Empfänger gebündelt werden kann. Während die Abbildung des Zielobjektes auf die Empfängerfläche des im Gerät integrierten Messempfängers für große Zielentfernungen somit noch eindeutig auf dem Empfänger liegt, wandert mit kürzer werdender Messentfernung das Messsignal zunehmend von der optischen Achse des Empfangspfades weg, so dass für spezielle; kurze Abstände zwischen dem Messgerät und dem Zielobjekt die Gefahr besteht, dass im Nahbereich der Detektion, das heißt für einen kleinen Abstand zwischen einem Zielobjekt und dem Messgerät, das Messsignal gegen null gehen kann.

Das erfindungsgemäße Nahbereichselement führt nun dazu, dass auch im Bereich kleiner Messdistanzen genügend Licht auf den Messempfänger auftrifft. In vorteilhafter Weise ... ist das erfindungsgemäße Nahbereichselement rotationssymmetrisch zur optischen Achse des Empfangspfades ausgebildet.

Dies ermöglicht in vorteilhafter Weise eine einfache und damit kostengünstige Realisierung eines Nahbereichselementes zur Parallaxen-Kompensation elektro-optischer Messgeräte.

Gegenüber den aus dem Stand der Technik bekannten Nahbereichselementen hat das Nahbereichselement der erfindungsgemäßen Vorrichtung den Vorteil, dass mit einer relativ einfachen Linse und einem Standardempfänger eine effektive Parallaxen-Kompensation erreichbar ist.

Vorteilhafte Ausführungen und Weiterbildungen des erfindungsgemäßen Messgerätes ergeben sich aus den in den Unteransprüchen aufgeführten Merkmalen.

In vorteilhafter Weise ist das Nahbereichselement des erfindungsgemäßen Messgerätes konzentrisch zur Empfangsoptik ausgebildet. Dabei kann in einer besonders vorteilhaften Ausführungsform das Nahbereichselement auch einstückig mit der Empfangsoptik ausgebildet sein.

Dabei bilden die Empfangsoptik und das Nahbereichselement in einer vorteilhaften Ausführungsform eine rotationssymmetrische, insbesondere eine kreissymmetrische Multifokuslinse, deren rotationssymmetrisch ausgebildeter Nahbereichsanteil zu einer effektiven Parallaxen-Kompensation für kurze Objektabstände führt.

In vorteilhafter Weise weist die Multifokuslinse einen ersten Bereich auf, der eine asphärische Oberflächenkrümmung besitzt. Dieser erste Bereich der Multifokuslinse, der die Aufgabe der gewöhnlichen Empfangsoptik übernimmt, ermöglicht durch seine asphärische Oberflächenkrümmung eine sehr gute Bündelung und Fokussierung des Messsignals auf dem Empfänger im Falle von großen Objektdistanzen.

In einer ersten Ausführungsform des erfindungsgemäßen Messgerätes weist die Multifokuslinse einen zweiten Bereich auf, der eine sich kontinuierlich ändernde Oberflächenkrümmung besitzt und als Nahbereichselement genutzt wird. Aufgrund der sich kontinuierlich ändernden Oberflächenkrümmung des zweiten Bereiches der Multifokuslinse besitzt dieser Bereich keine definierte Brennweite, sondern entspricht einer "Variabler-Fokus" Linse. Dieser Bereich der kontinuierlichen Krümmung erzeugt in der Ebene des Empfängers kein eindeutiges Bild des Objektes, sondern führt vielmehr zu einer diffusen Zone, relativ großen Querschnitts, senkrecht zur Achse des Empfangspfades. Messsignale aus dieser diffusen Zone können daher in vorteilhafter Weise genutzt werden, um auch bei kurzen Objektabständen noch genügend Messsignalintensität auf der aktiven Fläche des Empfängers zu gewährleisten. Bei optischen Systemen mit Parallaxe zwischen dem Sender und dem Empfänger ist daher eine derartige Multifokuslinse gut geeignet, genügend Signal auch bei kurzen Entfernungen auf dem Empfänger landen zu lassen.

In einer alternativen Ausführungsform des erfindungsgemäßen Messgerätes könnte der zweite Bereich der Multifokuslinse auch eine Konstante, beispielsweise sphärische Oberflächenkrümmung besitzen.

In vorteilhafter Weise umgibt bei dem erfindungsgemäßen Messgerät der zweite Bereich der Multifokuslinse den ersten Bereich ringförmig.

In alternativen Ausführungsformen kann dass Nahbereichselement diffraktive Strukturen, wie beispielsweise ein Beugungsgitter, insbesondere eine holographisches Beugungsgitter besitzen, die es für kurze Objektabstände ermöglichen, dass der rücklaufende Messstrahl in entsprechender Weise auf die Detektoroberfläche des Empfängers des Messgerätes umgelenkt wird. Dabei kann das Nahbereichselement als reines diffräktives Element, als refraktives Element oder aber auch als refraktives Element mit einer zusätzlichen diffraktiven Struktur ausgebildet sein.

In einer vorteilhaften Variante kann die Linse als annähernd Plan-Konvexe Linse ausgeführt, so dass in erster Linie nur die eine Linsenfläche starke Krümmungen aufweist, während die andere in guter Näherung plan ausgeführt ist. Die diffraktiven Strukturen werden vorteilhaft dabei auf der annähernd planen Linsenrückseite aufgebracht, wobei die für digitale Hologramme üblichen Methoden wie optischlithographische Strukturierung (insbesondere für Glaslinsen relevant) und Prägetechnik (für Linsen aus weicheren Materialien wie Kunststoffen) in Frage kommen.

In einer vorteilhaften Ausführungsform des erfindungsgemäßen Nahbereichselementes werden dabei als für den Nahbereich wirksame Strukturen so genannte Diffusor- oder auch so genannte Strahlteiler- (Beam-Splitter) Hologrammstrukturen genutzt. Diese führen dazu, dass der ursprünglich eine Fokus in der Brennebene in mehrere Einzelbrennpunkte an unterschiedlichen Positionen aufgeteilt wird, beziehungsweise dazu, dass ein kleinräumiger Fokus zu einem breiteren, durch die Hologrammstrukturen vorgegebenen Bildmuster in der Brennebene umgewandelt wird.

In einer vorteilhaften Ausführung ist das diffraktive Element einer Strahlteilerstruktur dabei so ausgeführt, dass einer der mehreren Brennpunkte in der Fokusebene der Linse einen Winkelversatz aufweist, der gerade die Winkelverschiebung kompensiert, die sich bei einem bi-axialen System für eine gegebene Entfernung durch die Parallaxe ergibt.

In einer weiteren vorteilhaften Ausführung ist die diffraktive Struktur des Nahbereichelementes derart ausgeführt, dass zwei Bereiche unterschieden werden. Innerhalb eines ersten, z.B. ringförmig den zentralen Linsenbereich umschließenden Feldes kann zur Optimierung der Parallaxenabhängigkeit ein Diffusor-Hologramm z.B. auf die plane Linsenseite aufgebracht werden. Innerhalb eines zweiten z.B. im zentralen Feld der Linse angeordneten Bereiches können demgegenüber diffraktive Strukturen eingebracht werden, welche zur optischen Korrektur von Linsenfehlern der dort z.B. sphärisch ausgeführten Linsenvorderseite genutzt werden. Durch geeignete derartige Strukturen kann so für den zweiten Bereich beispielsweise eine Temperaturkompensation des Brechungsindexes von Kunststoff für die Arbeitswellenlänge der Linse erzielt werden oder z.B. sphärische Abberationen vorteilhaft unterdrückt werden.

Dadurch, dass in zwei Bereichen des Nahbereichselementes zwei verschiedene Typen diffraktiver Struktur auf der Linse realisiert sind, können so vorteilhaft zwei Ziele gleiczeitig erreicht werden: Einerseits ist es möglich, eine Verbesserung der Abbildungseigenschaften des zentralen, für das Fernfeld nützlichen Linsenbereichs zu erzielen. Andererseits kann so eine zusätzliche Optimierung des Verhaltens der Linse bezüglich des Parallaxenproblems gelingen.

Dabei kann das Nahbereichselement als auch die Empfangsoptik aus Kunststoff hergestellt sein. In vorteilhafter Weise sind Empfangsoptik und Nahbereichselement einstückig aus Kunststoff, beispielsweise in Spritzgusstechnik ausgeformt. Dies ermöglicht eine einfache und kostengünstige Realisierung einer Parallaxenkompensierenden Abbildungsoptik für das erfindungsgemäße elektro-optische Messgerät. So kann beispielsweise ein Spritzguss-Werkzeugeinsatz durch einen reinen Drehprozess hergestellt werden. Auch ist die Abspritzung des Kunststoffteils aufgrund der Symmetrie, insbesondere der Rotationssymmetrie von Nahbereichselement und Abbildungsoptik präziser möglich. Gegebenenfalls können diffraktive Strukturen des Nahbereichselementes direkt beim Abspritzprozess der kombinierten Optik mit ausgebildet werden. Weitere Vorteile ergeben sich aus der Beschreibung eines erfindungsgemäßen Messgerätes.

Zeichnung

In der Zeichnung ist ein Ausführungsbeispiel eines erfindungsgemäßen elektro-optischen Messgerätes dargestellt. Die Beschreibung, die Zeichnungen und die Ansprüche enthalten zahlreiche Merkmale in Kombination. Ein Fachmann wird diese Merkmale auch einzeln betrachten und zu sinnvollen weiteren Kombinationen zusammenfassen.

Es zeigen:

Figur 1　einen berührungslosen Entfernungsmesser als ein Ausführungsbeispiel des erfindungsgemäßen Messgerätes in einer perspektivischen Übersichtsdarstellung,

Figur 2　eine schematische Darstellung des optischen Aufbaus eines Entfernungsmessers gemäß Figur 1,

Figur 3　ein Ausführungsbeispiel eines erfindungsgemäßen Nahbereichselementes nebst zugehöriger Abbildungsoptik in einer schematischen Darstellung,

Figur 4　eine Schnittdarstellung des optischen Elementes gemäß Figur 3 entlang einer Ebene AA',

Figur 5　die Messsignalverteilung auf der Empfängeroberfläche im Fall kurzer Objektabstände bei der Verwendung einer Standardlinse zur Bündelung des Messsignals auf den Empfänger,

Figur 6　eine entsprechende Messsignalverteilung in der Empfängerebene eines optischen Systems mit Parallaxe im Fall der Verwendung des erfindungsgemäßen Nahbereichselementes.

Beschreibung eines Ausführungsbeispiels

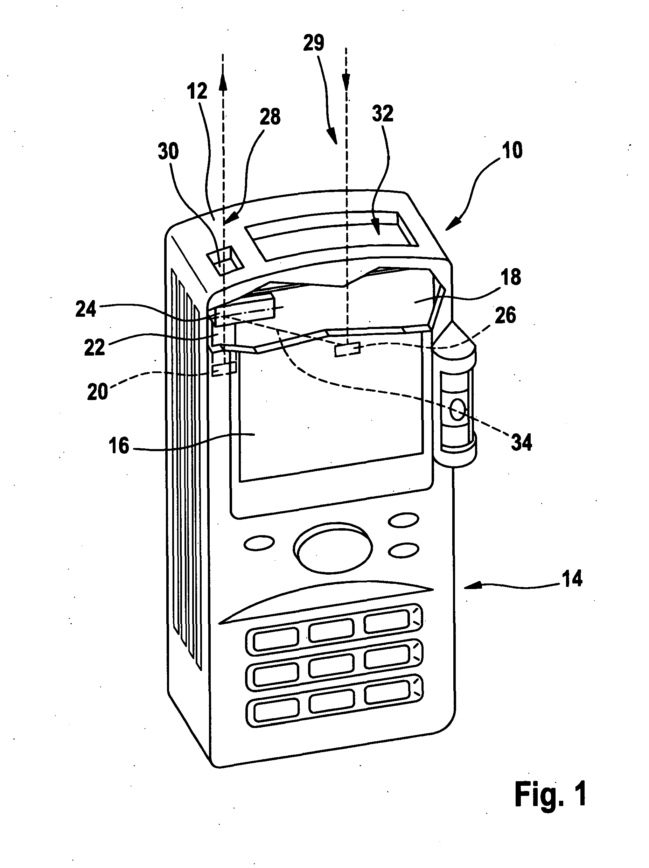

Figur 1 zeigt ein als Entfernungsmessgerät 10 ausgeführtes Messgerät. Dieses weist ein Gehäuse 12, Betätigungselemente 14 zum Ein- bzw. Ausschalten des Messgerätes und zum Starten bzw. Konfigurieren eines Messvorganges auf. Des Weiteren ist in dem Gehäuse 12 des Messgerätes 10 ein Display 16 zur Wiedergabe von Informationen und insbesondere zur Wiedergabe von Messergebnissen des Messgerätes vorgesehen.

Auf einem Trägerelement 18 innerhalb des Gehäuses 12 des Messgerätes 10 sind eine als Leserdiode ausgeführte Sendeeinheit 20 zur Erzeugung eines modulierten, optischen Sendesignals, ein Lichtkanal 22, eine Umlenkeinheit 24 zum Umlenken des Sendemesssignals auf eine Referenzstrecke und eine als Photodiode, insbesondere als APD ausgeführte Empfangseinheit 26 zum Empfangen eines Empfangsmesssignals angeordnet.

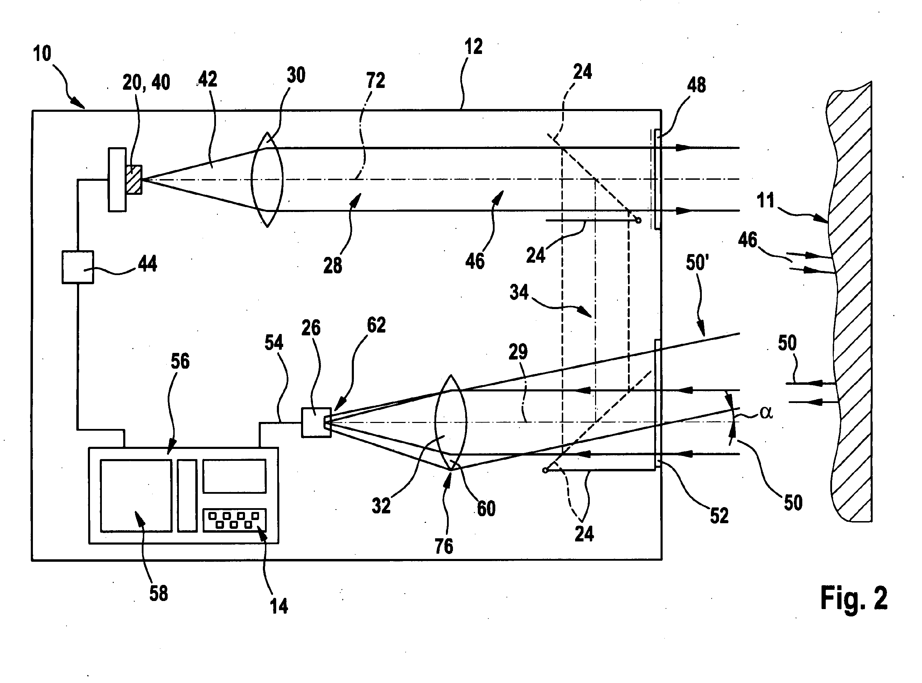

Figur 2 zeigt die optischen Komponenten des Entfernungsmessgerätes nochmals in einer schematisierten Darstellung.

Zur Messung eines Abstandes des Entfernungsmessgerätes 10 zu einem entfernten Gegenstand 11 wird im Betriebe des Entfernungsmessgerätes 10 ein Sendemesssignal von der Sendeeinheit 20 entlang eines Pfades 28 über eine Sendeoptik 30 gesendet. Das von einer Oberfläche des entfernten Gegenstandes 11 reflektierte bzw. gestreute Sendemesssignal wird über eine Empfangsoptik 32 als Empfangsmesssignal der Empfangseinheit 26 empfangen. Die optische Achse 72 des Sendepfades 28 des Gerätes ist dabei beabstandet zur optischen Achse 74 des Empfangespfades 29, so dass das Messgerät ein bi-axiales System bildet.

Aus einem zwischen dem Sendemesssignal und dem Empfangsmesssignal durchgeführten Phasenvergleich kann die Lichtlaufzeit zwischen Sender und Empfänger ermittelt werden, so dass über die bekannte Größe der Lichtgeschwindigkeit der gesuchte Abstand zwischen dem Messgeräte 10 und einem entfernten Gegenstand 11 bestimmt werden kann.

Um Laufzeiten, die vom Abstand unabhängig sind und beispielsweise bei der Erzeugung des Sendemesssignals und/oder bei einer Verarbeitung des Empfangsmesssignals entstehen, auszugleichen, wird vor einer Entfernungsmessung eine Referenzmessung durchgeführt. Hierbei wird das Sendemesssignal von der Umlenkeinheit 24 umgelenkt und über eine bekannte Referenzstrecke entlang eines Referenzpfades 34 direkt auf die Empfangseinheit 26 gerichtet.

Über die Sendereinheit 20, welche eine Lichtquelle in Form einer Laserdiode 40 aufweist, wird ein moduliertes Messsignal entlang des Sendepfades 28 ausgesendet. Die Sendeeinheit umfasst des Weiteren ein Steuergerät 44 zur Ansteuerung und insbesondere Modulation der Laserdiode 40. Mit Hilfe der Sendeoptik 30, welche in Figur 2 als eine einfache Linse nur schematisch angedeutet ist, wird ein paralleles Strahlenbündel 46 erzeugt und über ein Fenster 48, welches im Gehäuse 12 der Vorrichtung angebracht ist, aus dem Messgerät 10 ausgekoppelt.

Das modulierte Messsignal 46' wird an einem zu vermessenden Gegenstand 11 reflektiert, so dass sich ein rücklaufendes Strahlenbündel 50 ergibt, welches durch ein Fenster 52 zum Teil wieder in das Messgerät gelangt.

Das entlang des Empfangspfades 29 verlaufende Messsignal wird über die Empfangsoptik 32 auf die aktive Fläche 62 einer Empfangseinheit 26, beispielsweise einer Photodiode oder einer CCD-Anordnung gebündelt. Die Empfangseinheit 26 ist über elektrische Verbindungsmittel 54 mit einer Rechen- und Auswerteeinheit 56 verbunden, die beispielsweise aus der Phasenbeziehung zwischen dem ausgesendeten Messsignal 46 und dem rücklaufenden Messsignal 50 den Abstand des Objektes 11 zu einem Referenzpunkt des Messgerätes 10 ermittelt.

Darüber hinaus verfügt das erfindungsgemäße Messgerät zusätzlich über Ausgabemittel 58, die beispielsweise in Form eines Displays ausgestaltet sein können, und die neben der Anzeige des jeweiligen Messergebnisses einem Nutzer weitere Informationen, beispielsweise über den Status des Gerätes ermitteln können.

Bei kurzen Objektabständen eines zu vermessenden Objektes 11 zum Entfernungsmessgerät 10 tritt das rücklaufende Strahlenbündel 50' unter einem Winkel α zur optischen Achse 74 des Empfangspfades 29 in das Gerät ein, wie dies in Figur 2 angedeutet ist.

Um auch ein solches Messsignal 50' aus dem Nahbereich auf die aktive Fläche 62 der Empfangseinheit 26 zu bringen, so dass auch eine Entfernungsmessung für kurze Entfernungen zwischen dem Messgerät und einem zu vermessenden Objekt möglich ist, besitzt das erfindungsgemäße Messgerät ein optisches Nahbereichselement 60, welches rotationssymmetrisch zur Achse 74 des Empfangspfades 29 ausgebildet ist, und im Ausführungsbeispiel der Figur 2 einstückig und konzentrisch zur Empfangsoptik 32 angeordnet ist. Das Nahbereichselement 60 führt dazu, dass es neben der Fokussierung des rücklaufenden Strahlenbündels 50, welche sich für große Objektentfernungen ergibt, zu einer diffusen Beleuchtung der aktiven Fläche 62 des Empfangselementes 26 aufgrund von Strahlenbündeln 50' kommt, die unter einem Winkel zur optischen Achse 74 des Empfangspfades 29 in das Gerät 10 eintreten.

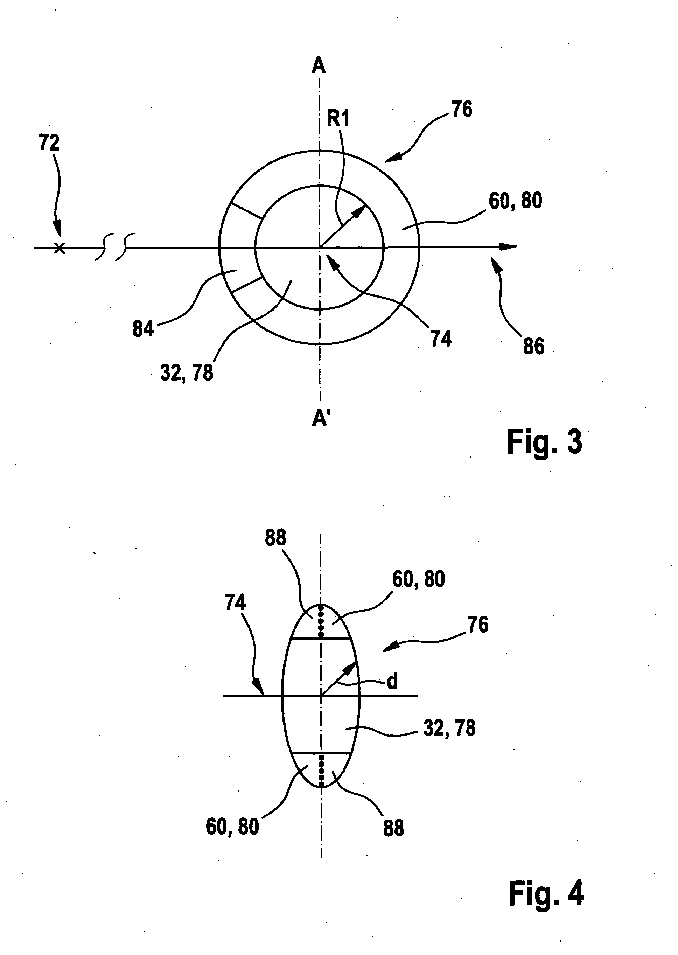

Figur 3 zeigt ein Ausführungsbeispiel für ein erfindungsgemäßes Nahbereichselement zur Parallaxen-Kompensation bi-axialer Entfernungsmesser. Im Ausführungsbeispiel gemäß Figur 3 ist das Nahbereichselement 60 konzentrisch zur Empfangsoptik 32 ausgebildet. Das Nahbereichselement 60 ist insbesondere in dieser Ausführungsform einstückig mit der Empfangsoptik, beispielsweise aus Kunststoff, ausgeformt.

Die Empfangsoptik 32 ist in vorteilhafter Weise als asphärische Linse optimiert, so dass sich für ein aus dem optisch unendlich kommendes Strahlenbündel 50 ein möglichst kleiner Spott auf der aktiven Fläche der Empfangseinheit 26 ergibt. Eine derartige asphärische Linse lässt sich nach folgender Gleichung beschreiben:

$$d = \frac{R^2}{R_0 \cdot \left(1 + \sqrt{1 - e \cdot \frac{R^2}{R_0}}\right)}$$

Dabei bezeichnet "d" die sogenannte "Pfeilhöhe", das heißt die Länge einer Strecke zwischen der Symmetrieachse der Linse und der Linsenoberfläche, wie dies in Figur 4, einer Schnittdarstellung durch die Achse AA' der Figur 3 verdeutlicht ist.

$R_0$ beschreibt eine Radiuskonstante, e ist die asphärische Korrektur der Linsenkrümmung und R bezeichnet den variablen Radius.

Bei dem erfindungsgemäßen Messgerät sind die auf unendlich optimierte Abbildungsoptik 32 sowie das Nahbereichselement in einem einzelnen Element 76 kombiniert, so dass sich im Ausführungsbeispiel eine kreissymmetrische Multifokuslinse 76 ergibt. Diese Multifokuslinse 76 ist insbesondere als "Variabler - Fokus Linse" ausgebildet.

Bei einer sogenannten "Variabler-Fokus"-Linse ist die Radiuskonstante $R_0$ der asphärischen Linse ab einem bestimmten Übergangsradius $R_1$ durch eine Variable ersetzt.

Für die erfindungsgemäße Multifokuslinse, ergibt sich somit:

$$R_0 = a_r \cdot R^2 + b_r \cdot R + c_r$$

Mit
$a_r$ Variable

$$b_r = -2 \cdot a_r \cdot R_L$$

$$c_r = R_0 + a_r \cdot R_L^2$$

Eine derartige Multifokuslinse weist somit einen ersten zentralen Bereich 78 auf, der eine asphärische Oberflächenkrümmung besitzt und insbesondere eine asphärische Linsenkorrektur beinhaltet. Darüber hinaus hat diese Multifokuslinse einen zweiten Bereich 80, der eine kontinuierlich sich ändernde Oberflächenkrümmung und damit eine sich entsprechend variierende Brennweite besitzt.

In dem Ausführungsbeispiel der Figuren 3 und 4 ist der erste, asphärisch korrigierte Bereich 78 zentral angeordnet und der zweite, als Nahbereichselement 60 dienende Bereich 80 der Multifokuslinse 76 umgibt den ersten, asphärischen Bereich ringförmig.

Eine derartige Linse 76 kann, wie in Figur 4 gezeigt, die entsprechenden Krümmungen auf beiden Durchtrittsseiten aufweisen, oder aber auch nur auf einer Seite. So kann die erfindungsgemäße Linse 76 auch näherungsweise als Plan-Konvex-Linse ausgeführt sein, wobei es insbesondere für Kunststofflinsen vorteilhaft sein kann, die näherungsweise plane Seite der Linse mit einer geringen, festen Krümmung auszuformen.

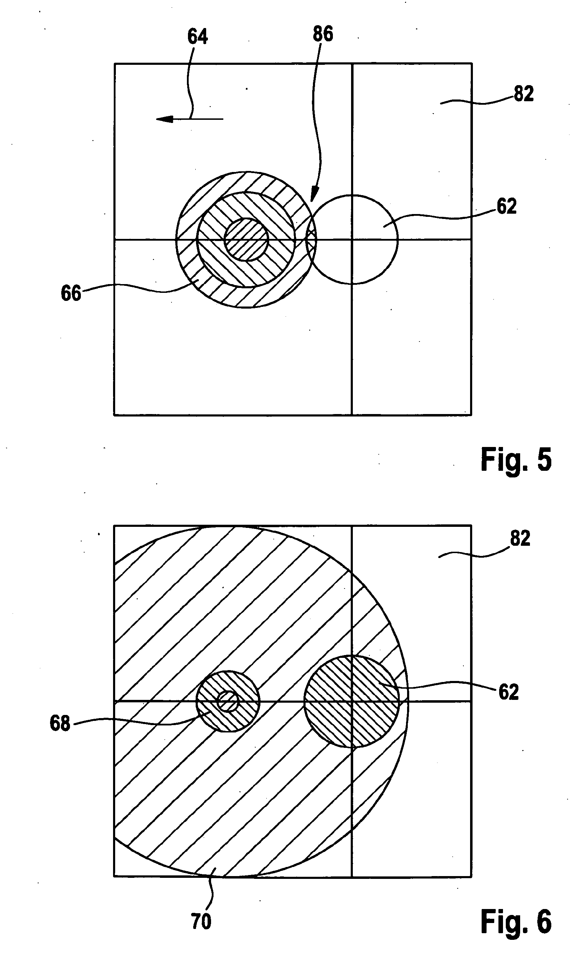

Der Effekt einer derartigen Multifokuslinse 76, insbesondere der Effekt des rotationssymmetrischen Nahbereichselementes 60 soll nachfolgend anhand der schematischen Darstellung der Figuren 5 und 6 verdeutlicht werden.

Figur 5 zeigt in schematischer Weise die Intensitätsverteilung in der Empfängerebene 82 für ein optisches System mit Parallaxe bei Verwendung einer Standardlinse. Für kurze Objektabstände gelangt nur sehr wenig Licht auf die aktive Detektorfläche 62. Da das Messsignal mit kürzer werdendem Objektabstand zunehmend schräger auf die Abbildungsoptik einfällt, kommt es zu einem in Figur 5 dargestellten Auswandern des gebündelten Messsignalfleckes von der Detektoroberfläche 62 in Richtung des Pfeils 64. Darüber hinaus ergibt sich aufgrund des kurzen Objektabstandes eine nur unvollkommene Fokussierung des Messstrahlenbündels in der Detektorebene 82. Die Intensitätsverteilung des Messstrahlenbündels in der Detektorebene ist in Figur 5 durch eine unterschiedlich dichte Schraffur des Messstrahlenbündels 66 angedeutet. Nur im Überlappungsbereich 86 der Intensitätsverteilung 66 mit der aktiven Fläche 62 der Empfangseinheit 26 wird das Messsignal von der Empfangseinheit 26 detektiert.

Figur 6 zeigt die Intensitätsverteilung bei Verwendung der erfindungsgemäßen Multifokuslinse 78 unter ansonsten gleichen Voraussetzungen wie in Figur 5.

Aufgrund der asphärisch korrigierten Empfangsoptik kommt es zu einem relativ gut fokussierten Messsignalbündel 68 in der Empfangsebene des Empfangselementes 26. Dieses stark gebündelte Messsignal liegt jedoch außerhalb der aktiven Fläche 62 der Empfangseinheit 26. Das Nahbereichselement 60, welches konzentrisch um die asphärisch korrigierte Empfangsoptik 32 ausgebildet ist, und eine sich kontinuierlich ändernde Oberflächenkrümmung aufweist, führt zu einer relativ ausgebreiteten, diffusen Zone 70, die auch die aktive Fläche 62 des Empfangselementes 26 überstreicht, so dass auch für den Bereich kurzer Objektabstände genügend Licht auf die aktive Fläche 62 des Empfangselementes 26 einfällt. Das erfindungsgemäße Nahbereichselement 60 führt somit zusammen mit der Empfangsoptik 32 zu einem gut fokussierten Messstrahlenbündel 68, welches von einer diffusen Zone 70 umgeben ist.

In vorteilhafter Weise lässt sich das erfindungsgemäße Nahbereichselement 60 zusammen mit der Empfangsoptik 32 einstückig, insbesondere aus Kunststoff herstellen. Diese Multifokuslinse 78 kann beispielsweise durch einen Spritzgussprozess ausgeformt werden. Dabei ist die Abspritzung durch die Symmetrie des Elementes, insbesondere durch dessen Rotations- bzw. Kreissymmetrie präziser möglich, als dies für die bisherigen Nahbereichselemente möglich war. Der Spritzguss-Werkzeugeinsatz für ein derartiges optisches Element ist leicht durch einen reinen Drehprozess mit hoher Genauigkeit herstellbar.

Es sei an dieser Stelle angemerkt, dass zur Parallaxen-Kompensation lediglich ein segmentartiges Nahbereichselement notwendig wäre, wie dies in Figur 3 mit dem Bezugszeichen 84 gekennzeichnet ist. Dieses Teilelement 84 ist symmetrisch zur Verbindungsachse 86 der beiden optischen Achsen 72 bzw. 74 des bi-axialen optischen Systems angeordnet. Die erfindungsgemäße rotationssymmetrische Ausbildung des Nahbereichselementes 60 führt jedoch zu einer vereinfachten Fertigungsmöglichkeit dieses Elementes, so dass in Kauf genommen wird, dass Teile der Linsenoberfläche, insbesondere Teile der Oberfläche des Nahbereichselementes, nicht benutzt werden.

Sollte es erforderlich sein, so könnten diese ungenutzt verbleibenden Teile des Nahbereichselementes beispielsweise durch eine Maske ausgeblendet bzw. abgedeckt werden, um ungewollte Streulichtanteile zu unterdrücken.

Das erfindungsgemäße Multifokuselement ermöglicht bei optischen Systemen mit Parallaxe zwischen Empfänger und Sender, beispielsweise bei elektro-optischen Entfernungsmessern, auch bei kurzen Entfernungen des Messgerätes zu einem zu vermessenden Objekt hinreichend Signal auf die aktive Fläche der Empfangseinheit umzulenken.

Das erfindungsgemäße Messgerät ist nicht auf das in den Figuren dargestellte Ausführungsbeispiel beschränkt. Dieses dient lediglich zur Verdeutlichung einer möglichen Ausführungsform der Erfindung.

Das erfindungsgemäße Messgerät ist nicht beschränkt auf die Verwendung eines refraktiven Nahbereichselementes. Das Nahbereichselement kann beispielsweise auch als ein diffraktives Element ausgebildet sein, oder als ein Kombination von refraktiven und diffraktiven Element hergestellt werden. Insbesondere ist es auch möglich, eine zusätzliche diffraktive Struktur auf oder in einem refraktiven Nahbereichselement auszubilden.

Zusätzlich zu den refraktiven Strukturen der Linse 76 kann die Linse oder beispielsweise auch nur das erfindungsgemäße Nahbereichselement auch über diffraktive Strukturen 88 verfügen, wie dies in Figur 4 durch eine gestrichelte Linie 88 im Bereich des Nahbereichselementes 60 bzw. 80 schematisch angedeutet ist.

In einer vorteilhaften Ausführung ist eine solche diffraktive Struktur des Nahbereichelementes derart ausgeführt, dass zwei Bereiche unterschieden werden. Innerhalb eines ersten, z.B. ringförmig den zentralen Linsenbereich umschließenden Feldes kann zur Optimierung der Parallaxen-Abhängigkeit ein Diffusor-Hologramm z.B. auf die plane Linsenseite aufgebracht werden. Innerhalb eines zweiten z.B. im zentralen Feld der Linse angeordneten Bereiches können demgegenüber diffraktive Strukturen eingebracht werden, welche zur optischen Korrektur von Linsenfehlern der dort z.B. sphärisch ausgeführten Linsenvorderseite genutzt werden. Durch geeignete derartige Strukturen kann so für den zweiten Bereich beispielsweise eine Temperaturkompensation des Brechungsindexes von Kunststoff für die Arbeitswellenlänge der Linse erzielt werden oder z.B. sphärische Abberationen vorteilhaft unterdrückt werden.

Dadurch, dass in zwei Bereichen des Nahbereichselementes zwei verschiedene Typen diffraktiver Struktur auf der Linse realisiert sind, können so vorteilhaft zwei Ziele gleichzeitig erreicht werden: Einerseits ist es möglich, eine Verbesserung der Abbildungseigenschaften des zentralen, für das Fernfeld nützlichen Linsenbereichs zu erzielen. Andererseits kann so eine zusätzliche Optimierung des Verhaltens der Linse bezüglich des Parallaxenproblems gelingen.

Insbesondere ist das erfindungsgemäße Messgerät nicht beschränkt auf ein elektro-optisches Entfernungsmessgerät, wie beispielsweise einen Laserentfernungsmesser. So kann das erfindungsgemäße Nahbereichselement beispielsweise auch bei optischen Systemen nach dem Triangulationsprinzip oder auch bei Intrusionsdetektoren Verwendung finden.

**Patentansprüche**

1. Elektro-optisches Messgerät, insbesondere ein Handgerät (10) zur berührungslosen Abstandsmessung, mit einem eine erste optische Achse (72) aufweisenden optischen Sendepfad (28), der zumindest einen optischen Sender (20) zur Aussendung eines Messsignals aufweist, sowie mit einem Empfangspfad (29) mit einer von der erste optischen Achse (72) beabstandeten zweiten optischen Achse (74), mit zumindest einer Empfangsoptik (32) zur Bündelung eines Messsignals in Richtung auf einen Empfänger (26), sowie mit einem optischen Nahbereichselement (60) zur Parallaxenkompensation, **dadurch gekennzeichnet, dass** das Nahbereichselement (60) rotations-symmetrisch zur zweiten optischen Achse (74) ausgebildet ist, wobei das Nahbereichselement (60) und die Empfangsoptik (32) eine kreissymmetrische Multifokuslinse (76) bilden, die einen ersten Bereich (78) aufweist, der eine asphärische Oberflächenkrümmung besitzt.

2. Messgerät nach Anspruch 1, **dadurch gekennzeichnet, dass** das Nahbereichselement (60) konzentrisch zur Empfangsoptik (32) ausgebildet ist.

3. Messgerät nach Anspruch 1 oder 2, **dadurch gekennzeichnet, dass** das Nahbereichselement (60) einstückig mit der Empfangsoptik (32) ausgebildet ist.

4. Messgerät nach Anspruch 1, **dadurch gekennzeichnet, dass** die Multifokuslinse (76) einen zweiten Bereich (80) aufweist, der eine sich kontinuierlich ändernde Oberflächenkrümmung besitzt.

5. Messgerät nach Anspruch 1, **dadurch gekennzeichnet, dass** die Multifokuslinse (76) einen zweiten Bereich (80) aufweist, der eine konstante Oberflächenkrümmung besitzt.

6. Messgerät nach Anspruch 1 und 4, bzw.1 und 5, **dadurch gekennzeichnet, dass** der zweite Bereich (80) den ersten Bereich (78) ringförmig umgibt

7. Messgerät nach zumindest einem der vorhergehenden Ansprüche 1 bis 3, **dadurch gekennzeichnet, dass** das Nahbereichselement (60) eine diffraktive Struktur (88) aufweist.

8. Messgerät nach einem der vorhergehenden Ansprüche 3 bis 7, **dadurch gekennzeichnet, dass** die Empfangsoptik (32) mit dem Nahbereichselement (60) aus Kunststoff ist.

9. Messgerät nach einem der vorhergehenden Ansprüche 3 bis 8, **dadurch gekennzeichnet, dass** die Empfangsoptik (32) zusammen mit dem Nahbereichselement (60) in Spritzgusstechnik ausgeformt ist.

10. Messgerät nach einem der vorhergehenden Ansprüche, **dadurch gekennzeichnet, dass** das Messgerät ein Laserentfernungsmessgerät (10) ist.

11. Multifokuslinse, insbesondere als Empfangslinse (32) für ein bi-axiales optisches Messgerät nach einem der Ansprüche 1 bis 10, **dadurch gekennzeichnet**, das die Linse (76) zusätzliche diffraktive Strukturen (88) besitzt

12. Multifokuslinse nach Anspruch 11, **dadurch gekennzeichnet, dass** die diffraktiven Strukturen (88) als Hologrammstrukturen in oder auf der Linse (76) ausgebildet sind.

13. Multifokuslinse nach Anspruch 11 oder 12, **dadurch gekennzeichnet, dass** die diffraktiven Strukturen (88) als Diffusor- oder Strahlteilerstrukturen ausgebildet sind.

14. Multifokuslinse nach einem der Ansprüche 11 bis 13, **dadurch gekennzeichnet, dass** die Linse (76) holographische Strukturen zur Korrektur von Linsenfehlern besitzt.

## Claims

1. Electro-optical measuring device, in particular a handheld device (10) for contactless distance measurement, with an optical transmission path (28) which has a first optical axis (72) and at least one optical transmitter (20) for transmitting a measurement signal, and with a reception path (29) with a second optical axis (74) which is spaced apart from the first optical axis (72), with at least one receiving optics (32) for focusing a measurement signal in the direction of a receiver (26), and with an optical short-range element (60) for parallax compensation, **characterized in that** the short-range element (60) is designed to be rotationally symmetrical relative to the second optical axis (74), the short-range element (60) and the receiving optics (32) forming a circularly symmetric, multifocal lens (76) which has a first region (78) with an aspheric surface curvature.

2. Measuring device according to Claim 1, **characterized in that** the short-range element (60) is designed to be concentric with the receiving optics (32).

3. Measuring device according to Claim 1 or 2, **characterized in that** the short-range element (60) is designed to be in one piece with the receiving optics (32).

4. Measuring device according to Claim 1, **characterized in that** the multifocal lens (76) has a second region (80), with a continuously changing surface curvature.

5. Measuring device according to Claim 1, **characterized in that** the multifocal lens (76) has a second region (80), with a contstant surface curvature.

6. Measuring device according to Claims 1 and 4, or 1 and 5, **characterized in that** the second region (80) surrounds the first region (78) in an annular fashion.

7. Measuring device according to at least one of the preceding Claims 1 to 3, **characterized in that** the short-range element (60) has a diffractive structure (88).

8. Measuring device according to one of the preceding Claims 3 to 7, **characterized in that** the receiving optics (32) with the short-range element (60) is made of plastic.

9. Measuring device according to one of the preceding Claims 3 to 8, **characterized in that** the receiving optics (32) together with the short-range element (60) is formed using injection-moulding.

10. Measuring device according to one of the preceding claims, **characterized in that** the measuring device is a laser distance-measuring instrument (10).

11. Multifocal lens, in particular as receiving lens (32) for a bi-axial optical measuring device according to one of Claims 1 to 10, **characterized in that** the lens (76) has additional diffractive structures (88).

12. Multifocal lens according to Claim 11, **characterized in that** the diffractive structures (88) are designed as hologram structures in or on the lens (76).

13. Multifocal lens according to Claim 11 or 12, **characterized in that** the diffractive structures (88) are designed as diffuser or beam splitter structures.

14. Multifocal lens according to one of Claims 11 to 13, **characterized in that** the lens (76) has holographic structures for correcting lens defects.

## Revendications

1. Appareil de mesure électro-optique, notamment un appareil portatif (10) destiné à la mesure de distance sans contact, comportant un trajet d'émission optique (28) présentant un premier axe optique (72) qui comprend au moins un émetteur optique (20) destiné à émettre un signal de mesure, ainsi qu'un trajet de réception (29) présentant un second axe optique (74) espacé du premier axe optique (72), comportant au moins un système optique de réception (32) destiné à collimater un signal de mesure dans la direction d'un récepteur (26), et comportant également un élément optique de proximité (60) destiné à compenser la parallaxe, **caractérisé en ce que** l'élément de proximité (60) est réalisé de manière à être symétrique de rotation par rapport au second axe optique (74), l'élément de proximité (60) et le système optique de réception (32) formant un objectif multifocal de symétrie circulaire (76) comprenant un premier domaine (78) présentant une courbure de surface asphérique.

2. Appareil de mesure selon la revendication 1, **caractérisé en ce que** l'élément de proximité (60) est réalisé de manière à être concentrique par rapport au système optique de réception (32).

3. Appareil de mesure selon la revendication 1 ou 2, **caractérisé en ce que** l'élément de proximité (60) est réalisé de manière solidaire du système optique de réception (32).

4. Appareil de mesure selon la revendication 1, **caractérisé en ce que** l'objectif multifocal (76) comprend un second domaine (80) qui présente une courbure de surface variant continûment.

**5.** Appareil de mesure selon la revendication 1, **caractérisé en ce que** l'objectif multifocal (76) comprend un second domaine (80) qui présente une courbure de surface constante.

**6.** Appareil de mesure selon les revendications 1 et 4 ou 1 et 5, **caractérisé en ce que** le second domaine (80) entoure le premier domaine (78) de manière annulaire.

**7.** Appareil de mesure selon au moins l'une des revendications 1 à 3 précédentes, **caractérisé en ce que** l'élément de proximité (60) comprend une structure diffractante (88).

**8.** Appareil de mesure selon l'une quelconque des revendications 3 à 7 précédentes, **caractérisé en ce que** le système optique de réception (32) comportant l'élément de proximité (60) est constitué de matière plastique.

**9.** Appareil de mesure selon l'une quelconque des revendications 3 à 8 précédentes, **caractérisé en ce que** le système optique de réception (32) est formé par moulage par injection avec l'élément de proximité (60).

**10.** Appareil de mesure selon l'une quelconque des revendications précédentes, **caractérisé en ce que** l'appareil de mesure est un appareil de mesure de distance à laser (10).

**11.** Objectif multifocal, notamment sous la forme d'un objectif de réception (32), destiné à un appareil optique biaxial selon l'une quelconque des revendications 1 à 10, **caractérisé en ce que** l'objectif (76) comprend des structures diffractantes supplémentaires (88).

**12.** Objectif multifocal selon la revendication 11, **caractérisé en ce que** les structures diffractantes (88) sont réalisées sous la forme de structures d'hologrammes dans ou sur l'objectif (76).

**13.** Objectif multifocal selon la revendication 11 ou 12, **caractérisé en ce que** les structures diffractantes (88) sont réalisées sous la forme de structures diffusantes ou de division de faisceaux.

**14.** Objectif multifocal selon l'une quelconque des revendications 11 à 13, **caractérisé en ce que** l'objectif (76) présente des structures holographiques destinées à corriger les aberrations optiques.

**Fig. 1**

**Fig. 2**

**A**

R1

76

72

60, 80

84

32, 78

74

86

**A'**

**Fig. 3**

88

60, 80

74

76

d

32, 78

60, 80

88

**Fig. 4**

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4316348 A1
- DE 19860464 A1
- WO 9205455 A
- WO 2000033104 A1
- DE 19804059 A1
- JP 09021874 A
- US 5589930 A